# EUROPÄISCHE PATENTANMELDUNG

(11) **EP 4 108 807 A1**
(43) Veröffentlichungstag der Anmeldung: **28.12.2022**
(21) Anmeldenummer: 21181396.9
(22) Anmeldetag: 24.06.2021
(51) Int. Cl.: C25B 1/04, C25B 15/08, B01D 53/26, C01B 3/50

(54) **VERFAHREN ZUM BETREIBEN EINER ELEKTROLYSEANLAGE UND ELEKTROLYSEANLAGE**

(71) Anmelder: Siemens Energy Global GmbH & Co. KG, 81739 München (DE)
(72) Erfinder: Bielmeier, Thomas, 90403 Nürnberg (DE); Braun, Stefan, 47506 Neukirchen-Vluyn (DE); Reckels, Udo, 41464 Neuss (DE); Wolf, Erik, 91341 Röttenbach (DE)

(57) **Zusammenfassung**

Die Erfindung betrifft ein Verfahren zum Betreiben einer Elektrolyseanlage (2) umfassend einen Elektrolyseur (4) zur Erzeugung von Wasserstoff und Sauerstoff als Produktgase sowie eine Kontrolleinheit (6). Zumindest das Wasserstoff-Produktgas, welches auch Sauerstoff als Fremdgas enthält, wird verdichtet. Eine Reduktion des Energiebedarfs bei der Bereinigung des Fremdgases im Produktgas der Elektrolyseanlage (2) wird ermöglicht, indem die Erwärmung des Produktgases durch den Verdichtungsprozess optimal genutzt wird, wobei anschließend das Wasserstoff-Produktgas einem Rekombinator (14, 14a, 14b) zugeführt wird, der einen Katalysator enthält, in welchem der Sauerstoff mit dem Wasserstoff zu Wasser rekombiniert.

## Beschreibung

Die Erfindung betrifft ein Verfahren zum Betreiben einer Elektrolyseanlage umfassend einen Elektrolyseur zur Erzeugung von Wasserstoff und Sauerstoff als Produktgase sowie eine Kontrolleinheit. Die Erfindung betrifft weiterhin eine solche Elektrolyseanlage.

Wasserstoff wird heutzutage beispielsweise mittels Proton Exchange Membrane (PEM)-Elektrolyse oder alkalische Elektrolyse erzeugt. Die Elektrolyseure produzieren mit Hilfe elektrischer Energie Wasserstoff und Sauerstoff aus dem zugeführten Wasser. Dieser Prozess findet in einem Elektrolysestack, zusammengesetzt von mehreren Elektrolysezellen, statt. In dem unter DC Spannung stehenden Elektrolysestack wird als Edukt Wasser eingebracht, wobei nach dem Durchlauf durch die Elektrolysezellen zwei Fluidströme, bestehend aus Wasser und Gasblasen (O₂ bzw. H₂) austreten.

In der Praxis befinden sich im Sauerstoffgasstrom dabei kleine Mengen an Wasserstoff und im Wasserstoffgasstrom kleine Mengen an Sauerstoff. Die Quantität des jeweiligen Fremdgases hängt vom Elektrolyse-Zelldesign ab und variiert auch unter dem Einfluss von Stromdichte, Katalysatorzusammensetzung, Alterung und bei einer PEM-Elektrolyseanlage vom Membranmaterial ab. Systemimmanent ist dabei, dass im Gasstrom des einen Produktgases jeweils das andere Produktgas in sehr geringen Mengen vorliegt. Im weiteren Prozessverlauf werden in der Regel die Sauerstoffspuren aus dem Wasserstoff entfernt, insbesondere wenn eine hohe Produktgasqualität gefordert ist, wie dies es bei der Nutzung des Wasserstoffs z.B. für Brennstoffzellen der Fall ist.

Um das oben beschriebene Problem zu lösen, werden insbesondere beide Produktgasströmen einem jeweiligen, katalytisch aktivierten Rekombinator zugeführt, in dem ein Katalysator den Wasserstoff mit dem Sauerstoff zu Wasser rekombinieren lässt. Dazu muss der Gasstrom zuvor auf mindestens 80°C aufgeheizt werden, damit die Umsatzraten des Rekombinators ausreichend hoch sind und somit die geforderte Gasreinheit erreicht wird. Die dafür genutzte verfahrenstechnische Anlage ist jedoch teuer und reduziert auf Grund ihres Energiebedarfs den Systemwirkungsgrad der Elektrolyseanlage, was wiederum erhöhte OPEX Ausgaben zur Folge hat.

Der Erfindung liegt daher die Aufgabe zugrunde, eine Reduktion des Energiebedarfs bei der Bereinigung des Fremdgases aus einem Produktgas einer Elektrolyseanlage zu ermöglichen.

Die Aufgabe wird erfindungsgemäß gelöst durch ein Verfahren zum Betreiben einer Elektrolyseanlage umfassend einen Elektrolyseur zur Erzeugung von Wasserstoff und Sauerstoff als Produktgase sowie eine Kontrolleinheit, wobei zumindest das Wasserstoff-Produktgas, welches auch Sauerstoff als Fremdgas enthält, verdichtet wird und anschließend das Wasserstoff-Produktgas einem Rekombinator zugeführt wird, der einen Katalysator enthält, in welchem der Sauerstoff mit dem Wasserstoff zu Wasser rekombiniert.

Die Aufgabe wird weiterhin erfindungsgemäß gelöst durch eine Elektrolyseanlage umfassend einen Elektrolyseur zur Erzeugung von Wasserstoff und Sauerstoff als Produktgase sowie eine Kontrolleinheit, wobei das Wasserstoff-Produktgas auch Sauerstoff als Fremdgas enthält, wobei eine Produktstrom-Leitung 10 für das Wasserstoff-Produktgas vorgesehen ist, wobei in der Produktstrom-Leitung 10 ein Verdichter eingebaut ist, wobei dem Verdichter ein Rekombinator nachgeschaltet ist, der einen Katalysator zur Rekombination des Sauerstoffs mit dem Wasserstoff zu Wasser enthält.

Die in Bezug auf das Verfahren nachstehend angeführten Vorteile und bevorzugten Ausgestaltungen lassen sich sinngemäß auf die Elektrolyseanlage übertragen.

Der Elektrolyseur ist hierbei für eine PEM-Elektrolyse oder für alkalische Elektrolyse ausgelegt.

Die Kontrolleinheit dient zur Erfassung und Auswertung von Parametern und ggf. Steuerung von Komponenten der Elektrolyseanlage.

Viele Applikationen der Elektrolyse erfordern eine Erhöhung des produktseitigen Gasdrucks. Vor allem die Niederdruckelektrolyse benötigt eine weitere Gasverdichtung. Dafür werden insbesondere Kolbenverdichter verwendet. Bei der Verdichtung erhöht sich die Gastemperatur auf ein Niveau höher als 80°C. Dies erlaubt, in einem nachgeschalteten Rekombinator, der als katalytisch aktives Material, z.B. Platin oder Rhodium enthält, den Prozess der Sauerstoffentfernung durchzuführen. Der wesentliche Vorteil hierbei ist, dass der Rekombinator keine zusätzliche Wärmezufuhr benötigt, damit die katalytische Rekombination stattfinden kann, sondern die Erwärmung des Produktgases durch den Verdichtungsprozess wird optimal für die Bereinigung vom Fremdgas eingesetzt. Die Ausführung des Rekombinationskatalysators ist dabei druck- und pulsationsfest. Der Rekombinator ist insbesondere innerhalb des Verdichters integriert oder dem Verdichter unmittelbar nachgeschaltet und kann in Bezug auf das ideale Druckniveau eingestellt werden. Somit werden Platz und Kosten gespart.

Im Hinblick auf eine weitere Steigerung der Reinigungsqualität vom Fremdgas wird bevorzugt eine zwei- oder mehrstufige Verdichtung angewandt und die Rekombination wird nach zumindest zwei Verdichtungsstufen durchführt, insbesondere wird die Rekombination nach jeder der Verdichtungsstufen durchgeführt. Der Rekombinationskatalysator ist nach dem Auslassventil und vor einem Zwischenkühler bzw. einem Kühler der letzten Verdichterstufe integriert.

Die Rekombination des H₂/O₂ Gemisches zu H₂O erfolgt in einer exothermen Reaktion. Die Endtemperatur steigt mit höheren Anteilen an O₂ im H₂ und muss gegebenenfalls begrenzt werden. Vorzugsweise wird das Produktgas daher unmittelbar nach dem Rekombinator oder innerhalb des Rekombinators gekühlt.

Die Kühlung erfolgt dabei vorzugsweise durch eine Zugabe von Wasser und/oder Wasserstoff. Auf diese Weise ist eine kostengünstige und technisch einfach realisierbare Kühlung möglich, da sowohl Wasser als auch Wasserstoff in der Elektrolyseanlage verfügbar ist.

Gemäß einer bevorzugten Ausführung kondensiert bei der Kühlung des Produktgases zumindest ein Teil des im Produktgas befindlichen Wasserdampfes und das Kondensat wird in den Elektrolyseur zugeführt. Die dem Rekombinator nachgeschaltete Kühlvorrichtung dient dabei nicht nur der Konditionierung der Gastemperatur für die folgende Verdichterstufe bzw. den folgenden Prozessschritt, sondern ist zusätzlich dafür ausgelegt, dass ein Teil des im Gas befindlichen Wasserdampfes kondensiert. Dieses Kondensat wird erneut verwendet, indem es der Elektrolyseanlage zugeführt wird, z.B. zur Reduzierung des Elektrolysewasserbedarfs.

Gemäß einer weiteren bevorzugten Ausführung wird ein Druck und/oder eine Temperatur am Eintritt und/oder Austritt des Rekombinators ermittelt wird und der ermittelte Messwert wird in der Kontrolleinheit verarbeitet. Die Erfassung der Betriebsparameter des Produktgases ermöglichen eine Überwachung und ggf. Steuerung der Umsatzrate und weiterer Performanceparameter, sowie einen sicheren und störungsfreien Betrieb.

Alternativ oder ergänzend dazu wird vorzugsweise die Temperatur des Kondensats ermittelt und in der Kontrolleinheit verarbeitet.

Bevorzugt wird der ermittelte Druck bzw. die ermittelte Temperatur in der Kontrolleinheit mit einem jeweiligen Referenzwert verglichen und beim Überschreiten des Referenzwerts wird eine Bypass-Leitung geöffnet, durch welche zumindest ein Teil des verdichteten Produktgases an den Rekombinator vorbeigeführt wird. Ein Teil des Gasstroms wird dabei nicht behandelt, was Auswirkung auf die freigesetzte Wärme hat. Dadurch wird die Austrittstemperatur auf einfache Weise kontrolliert.

Vorteilhafterweise ist der Katalysator, z.B. Platin oder Rhodium, auf einem keramischen Träger und/oder einem metallischen Träger aufgebracht. Über das Katalysatorvolumen kann dabei der Reinheitsgrad des Produktgases eingestellt werden.

Ausführungsbeispiele der Erfindung werden anhand einer Zeichnung näher erläutert. Hierin zeigen schematisch und stark vereinfacht:
- FIG 1: eine Elektrolyseanlage mit einem wasserstoffseitigen, einstufigen Verdichter, und
- FIG 2: eine Elektrolyseanlage mit einem wasserstoffseitigen, mehrstufigen Verdichter.

Gleiche Bezugszeichen habe in den Figuren die gleiche Bedeutung.

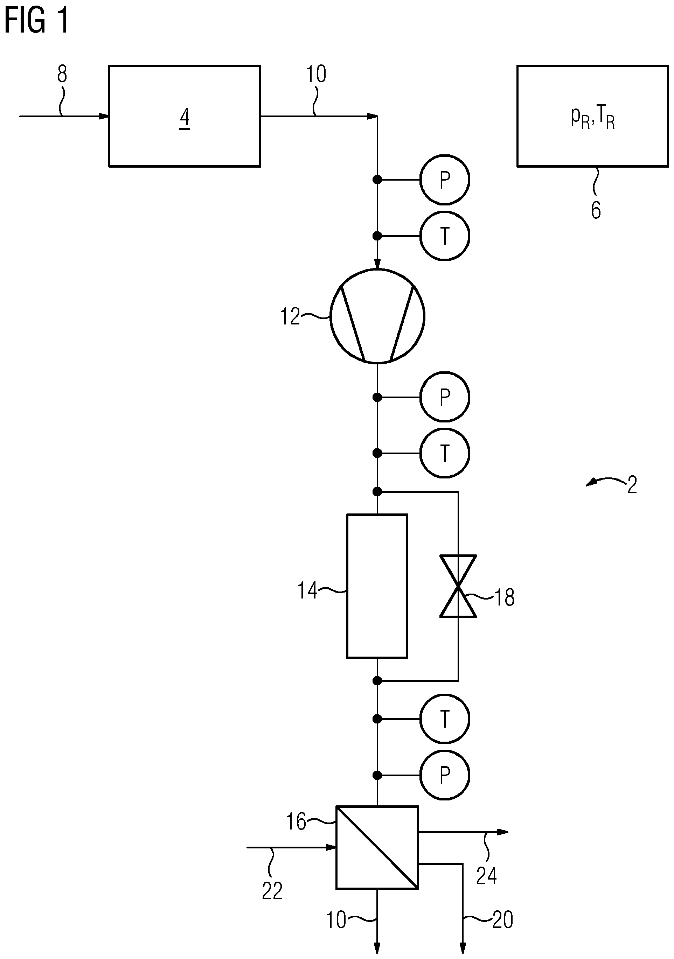

In FIG 1 ist eine Elektrolyseanlage 2 mit einem PEM- oder Alkali-Elektrolyseur 4 gezeigt. Der Elektrolyseur 4 umfasst mindestens eine hier nicht näher gezeigte Elektrolysezelle zum Zerlegen von Wasser. Die Elektrolyseanlage 2 weist zudem eine Kontrolleinheit 6 auf, die in der Figur symbolisch dargestellt ist. Die Kontrolleinheit 6 steuert Komponenten der Elektrolyseanlage 2 in Abhängigkeit von diversen hinterlegten, berechneten oder erfassten Parametern.

Im Elektrolyseur 4 wird über eine Eduktstrom-Leitung 8 ein Eduktstrom aus Wasser eingeführt. Das Wasser wird im Elektrolyseur 4 in die Produktgase Wasserstoff und Sauerstoff zerlegt und beide Produktströme werden separat hinausgeleitet. Der Elektrolyseur 4 weist hierzu eine Produktstrom-Leitung 10 auf, mit deren Hilfe ein erstes Produkt, hier Wasserstoff, hinausgeführt wird. Der nachfolgend beschriebene Aufbau bezieht sich auf den Wasserstoff-Produktstrom, sauerstoffseitig kann jedoch der gleiche Aufbau vorliegen.

Das Wasserstoff-Produktgas in der Produktstrom-Leitung 10 enthält Sauerstoff-Verunreinigungen, die entfernt werden müssen. Der Wasserstoff-Produktstrom wird hierzu zunächst in einem Verdichter 12 komprimiert, wobei sich seine Temperatur auf über 80°C erhöht. Unmittelbar danach wird der erwärmte Wasserstoff-Produktstrom einem Rekombinator 14 zugeführt, der als Katalysatormaterial Platin oder Rhodium enthält. Der Rekombinator 14 kann dabei auch im Verdichter 12 integriert sein. Der Katalysator ist dabei auf einem keramischen oder metallischen Träger aufgebracht. Im Rekombinator lässt der Katalysator den Wasserstoff mit dem Sauerstoff rekombinieren, so dass Wasser entsteht. Der Produktstrom wird anschließend in einer Kühlvorrichtung 16 gekühlt, da die Reaktion im Rekombinator exotherm verläuft. Die Kühlung erfolgt dabei durch eine Zugabe von Wasser und/oder Wasserstoff durch eine Kühlleitung 22. Das Kühlmedium verlässt anschließend die Kühlvorrichtung 16 durch die Leitung 24.

Alternativ kann die Kühlung noch im Rekombinator 14 stattfinden, so dass die Kühlvorrichtung 16 im Rekombinator 14 integriert ist.

Um den Rekombinationsprozess zu kontrollieren, werden im gezeigten Ausführungsbeispiel ein Druck p und eine Temperatur T des Produktgases sowohl am Eintritt als auch am Austritt des Rekombinators erfasst und der Kontrolleinheit 6 zugeführt. In der Kontrolleinheit 6 werden die ermittelten Ist-Werte insbesondere im Hinblick auf eine Überschreitung eines jeweiligen Referenzwerts p_{R}, T_{R} überwacht. Im Falle einer Abweichung von den zulässigen Betriebsparameter wird eine Bypass-Leitung 18 geöffnet wird, welche zumindest einen Teil des verdichteten Produktgases an den Rekombinator vorbeiführt.

Bei der Kühlung des Wasserstoff-Produktstroms kondensiert zumindest ein Teil des im Gas befindlichen Wasserdampfes und das Kondensat wird über eine Rückführleitung 20 in den Elektrolyseur 4 zugeführt.

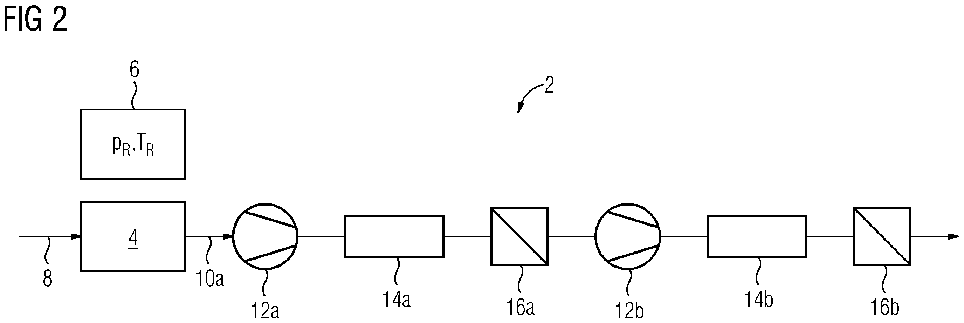

Das zweite Ausführungsbeispiel gemäß FIG 2 unterscheidet sich im Wesentlichen dadurch, dass eine mehrstufige Verdichtung durchgeführt wird. Entsprechend sind zwei Verdichterstufen 12a und 12b eingebaut. Jeder Verdichterstufen 12a, 12b ist ein Rekombinator 14a, 14b und eine Kühlvorrichtung 16a, 16b nachgeschaltet.

## Patentansprüche

1. Verfahren zum Betreiben einer Elektrolyseanlage (2) umfassend einen Elektrolyseur (4) zur Erzeugung von Wasserstoff und Sauerstoff als Produktgase sowie eine Kontrolleinheit (6), wobei zumindest das Wasserstoff-Produktgas, welches auch Sauerstoff als Fremdgas enthält, verdichtet wird und anschließend das Wasserstoff-Produktgas einem Rekombinator (14, 14a, 14b) zugeführt wird, der einen Katalysator enthält, in welchem der Sauerstoff mit dem Wasserstoff zu Wasser rekombiniert.

2. Verfahren nach Anspruch 1, wobei eine zwei- oder mehrstufige Verdichtung angewandt wird und die Rekombination nach zumindest zwei Verdichtungsstufen (12a, 12b) durchführt wird, insbesondere nach jeder der Verdichtungsstufen durchgeführt wird.

3. Verfahren nach Anspruch 1 oder 2, wobei das Produktgas unmittelbar vor oder nach dem Rekombinator (14, 14a, 14b) oder innerhalb des Rekombinators (14, 14a, 14b) gekühlt wird.

4. Verfahren nach Anspruch 3, wobei die Kühlung durch eine Zugabe von Wasser und/oder Wasserstoff erfolgt.

5. Verfahren nach Anspruch 3 oder 4, wobei bei der Kühlung des Produktgases zumindest ein Teil des im Produktgas befindlichen Wasserdampfes kondensiert und das Kondensat in den Elektrolyseur (4) zugeführt wird.

6. Verfahren nach einem der vorhergehenden Ansprüche, wobeiein Druck (p) und/oder eine Temperatur (T) am Eintritt und/oder Austritt des Rekombinators (14, 14a, 14b) ermittelt wird und der ermittelte Messwert wird in der Kontrolleinheit (6) verarbeitet.

7. Verfahren nach Anspruch 5, wobei die Temperatur des Kondensats ermittelt und in der Kontrolleinheit (6) verarbeitet wird.

8. Verfahren nach einem der Ansprüche 6 oder 7, wobei der ermittelte Druck (p) bzw. die ermittelte Temperatur (T) in der Kontrolleinheit (6) mit einem jeweiligen Referenzwert (p_{R}, T_{R}) verglichen wird und beim Überschreiten des Referenzwerts (p_{R}, T_{R}) eine Bypass-Leitung (18) geöffnet wird, durch welche zumindest ein Teil des verdichteten Produktgases an dem Rekombinator (14, 14a, 14b) vorbeigeführt wird.

9. Verfahren nach einem der vorhergehenden Ansprüche, wobei der Katalysator auf einem keramischen Träger und/oder einem metallischen Träger aufgebracht ist.

10. Elektrolyseanlage (2) umfassend einen Elektrolyseur (4) zur Erzeugung von Wasserstoff und Sauerstoff als Produktgase sowie eine Kontrolleinheit (6), wobei das Wasserstoff-Produktgas auch Sauerstoff als Fremdgas enthält, wobei eine Produktstrom-Leitung (10) für das Wasserstoff-Produktgas vorgesehen ist, wobei in der Produktstrom-Leitung (10) ein Verdichter (12, 12a, 12b) eingebaut ist, wobei dem Verdichter (12, 12a, 12b) ein Rekombinator (14, 14a, 14b) nachgeschaltet ist, der einen Katalysator zur Rekombination des Sauerstoffs mit dem Wasserstoff zu Wasser enthält.

11. Elektrolyseanlage (2) nach Anspruch 10, welche einen in-, zwei- oder mehrstufigen Verdichter (12a, 12b) umfasst und nach zumindest zwei Verdichtungsstufen jeweils ein Rekombinator (14a, 14b) vorgesehen ist, insbesondere nach jeder der Verdichtungsstufen ein Rekombinator (14a, 14b) vorgesehen.

12. Elektrolyseanlage (2) nach Anspruch 10, bei der vor oder nach dem Rekombinator (14, 14a, 14b) oder innerhalb des Rekombinators eine Kühlervorrichtung (16, 16a, 16b) zum Kühlen des Produktgases installiert ist.

13. Elektrolyseanlage (2) nach Anspruch 12, wobei die Kühlervorrichtung (16, 16a, 16b) für eine Zugabe von Wasser und/oder Wasserstoff als Kühlmittel über eine Kühlleitung (22) ausgelegt ist.

14. Elektrolyseanlage (2) nach Anspruch 12 oder 13, wobei die Kühlervorrichtung (16, 16a, 16b) für eine zumindest teilweise Kondensation des im Produktgas befindlichen Wasserdampfes ausgelegt ist und eine Rückführleitung (20) für das Kondensat vorgesehen ist, welche in den Elektrolyseur (4) mündet.

15. Elektrolyseanlage (2) nach einem der Ansprüche 10 bis 14, wobei Messvorrichtungen für eine Druck- und/oder die Temperaturmessung am Eintritt und/oder Austritt des Rekombinators (14, 14a, 14b) angeordnet sind und die Kontrolleinheit (6) dafür eingerichtet ist, die Messsignale (p, T) zu verarbeiten.

16. Elektrolyseanlage (2) nach Anspruch 14, wobei eine weitere Messvorrichtung zum Ermitteln der Temperatur des Kondensats vorgesehen ist, und die Kontrolleinheit (6) dafür eingerichtet ist, das Messsignal der weiteren Messvorrichtung zu verarbeiten.

17. Elektrolyseanlage (2) nach Anspruch 15 oder 16, wobei die Kontrolleinheit (6) dafür eingerichtet ist, den ermittelten Druck (p) bzw. die ermittelte Temperatur (T) mit einem jeweiligen Referenzwert (p_{R}, T_{R}) zu vergleichen und beim Überschreiten des Referenzwerts (p_{R}, T_{R}) eine Bypass-Leitung (18) zu öffnen, welche zumindest einen Teil des verdichteten Produktgases an den Rekombinator (14, 14a, 14b) vorbeiführt.

18. Elektrolyseanlage (2) nach einem der Ansprüche 10 bis 17, wobei der Katalysator auf einem keramischen Träger und/oder einem metallischen Träger aufgebracht ist.
